# EUROPÄISCHE PATENTSCHRIFT

(11) **EP 3 601 081 B1**
(45) Veröffentlichungstag und Bekanntmachung des Hinweises auf die Patenterteilung: **25.06.2025**
(21) Anmeldenummer: 18713200.6
(22) Anmeldetag: 22.03.2018
(51) Int. Cl.: B65D 33/16, B65D 65/46

(54) **SACK FÜR FLÜSSIGE UND PULVERFÖRMIGE STOFFE MIT LÖSLICHEM FLÄCHENABSCHNITT, VERFAHREN UND VERWENDUNG DAMIT UND VERWENDUNG EINES LÖSLICHEN FLÄCHENABSCHNITTS**
BAG FOR LIQUID AND POWDER MATERIALS WITH SOLUBLE SURFACE SECTION, METHOD AND USE THEREWITH AND USE OF A SOLUBLE SURFACE SECTION
SAC POUR MATÉRIAU LIQUIDE OU PULVÉRULENT AYANT UNE PARTIE SOLUBLE, PROCÉDÉ ET UTILISATION AVEC UN TEL SAC ET UTILISATION D'UNE PARTIE SOLUBLE

(30) Priorität: 27.03.2017 EP 17163159
(43) Veröffentlichungstag der Anmeldung: 05.02.2020
(73) Patentinhaber: Sika Technology AG, 6340 Baar (CH)
(72) Erfinder: BAUMEISTER, Florian, 86159 Augsburg (DE); ZINTEL, Marc, 86438 Kissing (DE); BOSSE, Tobias, 86159 Augsburg (DE); SEMLINGER, Thomas, 86159 Augsburg (DE); ELLENRIEDER, Florian, 86152 Augsburg (DE); MAREK, Oliver, 86159 Augsburg (DE)
(74) Vertreter: Sika Patent Attorneys
(86) Internationale Anmeldenummer: PCT/EP2018/057242
(87) Internationale Veröffentlichungsnummer: WO 2018/177859

(56) Entgegenhaltungen:
- EP-A1- 0 406 170
- DE-A1- 2 914 206
- JP-A- 2001 097 392

## Beschreibung

Die vorliegende Erfindung handelt von einem Sack für flüssige und pulverförmige Stoffe, ein Verfahren zur Entnahme eines flüssigen oder pulverförmigen Stoffes aus einem derartigen Sack, ein Verfahren zur Herstellung eines derartigen Sacks. Die Erfindung betrifft ferner die Verwendung eines Flächenabschnitts aus einem wasserlöslichen Polymer als Teil eines Sacks für flüssige oder pulverförmige Stoffe zur Reduzierung der Freisetzung von unangenehmen Gerüchen und/oder gesundheitsschädlichen Stoffen in die Luft.

Baustoffe auf mineralischer Basis wie beispielsweise Zement, Quarzsand aber auch andere Stoffe, wie beispielsweise Pflanzenschutzmittel und Düngemittel, werden häufig in Wasser gelöst, bzw. dispergiert bevor sie weiterverarbeitet werden. Diese Stoffe werden häufig in Säcken o. ä. verpackt. Bei flüssigen wie auch bei pulverförmigen Stoffen werden diese häufig in die Atmosphäre abgegeben, beispielsweise als Dämpfe oder (alveolengängigen) Stäube, wenn der Inhalt der Säcke in Wasser geschüttet wird. Um eine Exposition von Personen zu vermeiden wären entsprechende Schutzausrüstungen notwendig. Auf Baustellen, wo eine große Zahl an Personen gleichzeitig arbeitet, ist dies schwierig umzusetzen, da häufig mit großen Mengen an Baustoffen gearbeitet wird und es so permanent zu Staubexpositionen kommen würde, d.h. die Schutzausrüstung permanent getragen werden müsste. Ähnliches gilt für Pflanzenschutzmittel und Düngemittel, die in die entsprechenden Landmaschinen ggf. in entsprechenden Garagen eingefüllt werden müssen und eine längere Belüftung dieser Garagen notwendig wäre.

Düngemittel, Pflanzenschutzmittel und mineralische Stäube, wie beispielsweise Zementstaub, Quarzstaub etc. um bei oben genannten Beispielen zu bleiben, sind jedoch häufig gesundheitsschädlich, unter anderem wegen der, in oben genannten Situationen, vorherrschenden Konzentration. Je nach Stoff, beispielsweise Aluminiumpulver für Porenbeton, kann es auch zu Staubexplosionen kommen, sollten entsprechende Stäube freigesetzt werden (was bisher beispielsweise durch Suspendieren in Ölen, Glykolethern etc. vermieden werden muss).

Gesetzliche Regelungen zum Gesundheits- und Arbeitsschutz, insbesondere Expositionsgrenzwerte, sind in den letzten Jahren strenger geworden und eine weitere Verschärfung ist in der Zukunft zu erwarten. Die Formulierungen entsprechend zu ändern, so dass weniger flüchtige Bestandteile enthalten sind ist grundsätzlich denkbar, beispielsweise ist bei Pulvern die Verpressung zu Pellets eine theoretische Option. Jedoch lassen sich nicht alle Pulver zu stabilen Pellets verpressen, die auch nach längerem Transport und den damit einhergehenden Erschütterungen keine Stäube bilden. Eine Formulierungsseitige Anpassung ist ferner nicht in allen Fällen möglich zumindest nicht ohne die Kosten signifikant zu erhöhen.

Eine andere Option ist die Bereitstellung neuartiger Verpackungen die die Erzeugung von Dämpfen oder Stäuben minimieren bzw. vermeiden.

Verpackungen aus wasserlöslichen Polymeren, beispielsweise Polyvinylalkoholen, sind bei Waschmitteln bekannt. Hierbei wird die Waschmittelmenge für eine Wäsche in einen entsprechend kleinen Beutel aus dem wasserlöslichen Polymer abgefüllt und dieser Behälter dann zur Wäsche gegeben. Der Behälter löst sich dann vollständig auf und gibt das Waschmittel frei.

Aus der EP 0 406 170 A1 und der JP 2001 097392 A sind Verpackungen bekannt, deren Bodenöffnungen mit Hilfe von Nähten oder Versiegelungen aus wasserlöslichen Polymeren, beispielsweise Polyvinylalkoholen verschlossen sind.

Bei, unter anderem, den oben genannten Baustoffen, Pflanzenschutzmitteln, Düngern etc. werden häufig größere Gebinde benötigt (bis zu 25 kg und gegebenenfalls sogar mehr). Entsprechende Säcke aus wasserlöslichen Polymeren wie Polyvinylalkohol müssten hier aufgrund der mechanischen Stabilität eine Dicke aufweisen, die eine längere Auflösungszeit zur Folge hat, was nicht wünschenswert ist. Alternativ wäre eine Umverpackung denkbar, die für die mechanische Stabilität sorgt. Entsprechende zweilagige Säcke herzustellen, sei es auf konventionellem Wege oder mittels form fill seal (FFS)-Verfahren erfordert jedoch signifikant höheren apparativen und somit finanziellen Aufwand. Im Falle des FFS-Verfahrens wären beispielsweise zwei hintereinandergeschaltete Maschinen notwendig.

Folglich ist es die Aufgabe der vorliegenden Erfindung eine Verpackung bereitzustellen, die auch für höhere Gewichte geeignet ist, die Freisetzung von unangenehmen Gerüchen und/oder gesundheitsschädlichen Stoffen in die Luft vermeidet oder zumindest minimiert und gleichzeitig mit bestehenden Maschinen mit geringer oder gar keiner Modifikation hergestellt werden können.

Die Erfindung stellt daher einen Sack gemäss Anspruch 1 zur Verfügung.

Der erfindungsgemäße Sack kann in einen Behälter mit Wasser derart eingetaucht werden, dass sich der Flächenabschnitt (F) auflöst und somit die Öffnung und Entleerung des Sacks teilweise oder vollständig unter Wasser erfolgt. Die im Sack befindlichen Stoffe kommen also zuerst mit Wasser in Kontakt und somit wird die Bildung von Stäuben, insbesondere alveolengängigen Stäuben und Dämpfen (bei Flüssigkeiten) vermieden bzw. weitgehend minimiert. Zudem kann der Sack mit allen gängigen Verfahren hergestellt werden, mit geringfügiger oder sogar ohne Modifikation dieser Maschinen. Eine Anpassung der Rezepturen der mit dem Sack verpackten Stoffen die aufwändig oder eventuell sogar nicht möglich ist, ist folglich nicht notwendig.

In der vorliegenden Erfindung bedeutet "Flächenabschnitt", einen Teil der Fläche des Sacks. Folglich schließt der Begriff "Flächenabschnitt" aus, dass der gesamte Sack aus dem wasserlöslichen Polymer besteht.

"Direkter Kontakt mit dem Füllgut" bedeutet in der vorliegenden Erfindung, dass der Flächenabschnitt (F) einen Abschnitt des Sacks bedeckt, der aus dem wasserunlöslichen Papier und/oder wasserunlöslichen Polymer ausgespart ist, so dass das wasserlösliche Polymer im flächenabschnitt (F) im Gebrauch die direkte Abgrenzung des Füllguts von der Umgebung ausbildet. Lösungen, in denen der Flächenabschnitt (F) als Verschluss-, Klebe oder Nähmaterial zum Verschließen von an- oder aufeinanderliegenden Anteilen von wasserunlöslichem Papier und/oder wasserunlöslichem Polymer verwendet wird, sind in der vorliegenden Erfindung somit ausdrücklich ausgeschlossen.

Der Flächenabschnitt (F) befindet sich auf der Bodenfläche des Sacks.

Die Säcke weisen einen Standboden und manche Säcke einen sogenannten Ventilboden auf, durch den der Sack befüllt wird. Beispielsweise können konventionelle Säcke beispielsweise für Zement oder Trockenmörtelmischung einen Standboden haben auf dem der Sack auf dem Boden steht während die Oberseite des Sacks geöffnet wird und der Inhalt dann in einen Eimer oder Betonmischer umgeschüttet wird.

In der vorliegenden Erfindung kann der Sack ebenfalls einen Standboden und einen Ventilboden aufweisen, wobei der Ventilboden oder der Standboden den Flächenabschnitt (F) enthält oder daraus besteht. Hierzu kann beispielsweise der Flächenabschnitt vor Befüllen des Sacks auf den Ventilboden oder auf den Standboden aufgebracht werden, bzw. der Flächenabschnitt sich seitlich auf dem Sack befinden, so dass der Sack herkömmlich verschweißt oder eingeschlagen werden kann.

Das herkömmliche Fertigungsverfahren für derartige Säcke muss folglich an sich nicht verändert werden, lediglich die verwendeten Materialien müssen entsprechend angepasst werden. Da Standböden üblicherweise mittels eines separaten Bodenblatts gefertigt werden, kann die Produktion auf herkömmliche Weise erfolgen. Dadurch dass sich der Flächenabschnitt (F) vollständig im Standboden befindet, muss beispielsweise nur das Bodenblatt ausgetauscht werden.

Der Standboden besteht nicht vollständig aus dem Flächenabschnitt (F). Der Grund hierfür ist, dass sich Säcke mit einem Standboden, der vollständig aus dem Flächenabschnitt (F) besteht nicht mit Hilfe herkömmlicher Papiersackmaschinen maschinell fertigen lassen.

Bei einem Sack mit Standboden besteht die Bodenfläche des Sacks aus einem wasserunlöslichen Papier und/oder wasserunlöslichen Polymer und dem Flächenabschnitt (F).

Der Flächenabschnitt (F) macht mehr als 11,5% und nicht mehr als 90% der Bodenfläche des Sacks aus. Der Flächenabschnitt (F) macht stärker bevorzugt 15% oder mehr und nicht mehr als 75%, noch stärker bevorzugt 20% oder mehr und nicht mehr als 55% und am stärksten bevorzugt 30% oder mehr und nicht mehr als 45% der Bodenfläche des Sacks aus. Wenn der Flächenabschnitt (F) 11,5% oder weniger der Bodenfläche ausmacht, ist die entstehende Öffnung des Sacks zu klein, um eine schnelle und vollständige Entleerung des Sacks zu gewährleisten.

Wenn der Flächenabschnitt (F) mehr als 90% der Bodenfläche ausmacht, kann die Stabilität des Sacks nicht gewährleistet werden.

Der Sack kann einen Tragegriff aufweisen. Falls der Sack einen Ventil und einen Standboden und einen Tragegriff aufweist, beispielsweise wie oben ausgeführt, befindet sich der Tragegriff vorzugsweise oben bezogen auf den Sack wenn der Sack aufrecht steht und horizontal betrachtet wird.

Alternativ kann der Sack ein Blockbodensack, ein Blockbodenbeutel, ein Kreuzbodensack, ein Ventilseitenfaltensack, ein Falzbodensack, ein Mini-Seal-Sack oder ein Siegelrandbeutel sein.

Vorzugsweise macht der Flächenabschnitt (F) nicht mehr als 35% der Oberfläche des Sacks aus, stärker bevorzugt nicht mehr als 25 % der Oberfläche des Sacks, noch stärker bevorzugt nicht mehr als 15 % der Oberfläche des Sacks aus. Es ist des Weiteren bevorzugt, dass der Flächenabschnitt (F) mindestens 2% der Oberfläche des Sacks, stärker bevorzugt mindestens 5 % der Oberfläche des Sacks, noch stärker bevorzugt mindestens 7,5 % der Oberfläche des Sacks ausmacht.

Das Material das auch den Flächenabschnitt (F) bildet kann mit dem/den weiteren Material(ien) des Sacks überlappen bzw. Teilflächen des Materials das auch den Flächenabschnitt (F) bildet können beschichtet derart beschichtet sein, dass sich das Material an den beschichteten Stellen nicht oder verzögert auflöst. Letzteres kann beispielsweise der Fall sein, wenn bei herkömmlichen Ventilbodensäcken als Bodenblatt ein, an den Rändern beschichteten Film aus wasserlöslichem Polymer, beispielsweise mit LDPE an den Rändern beschichteter Film, eingesetzt wird. Die LDPE-Beschichtung vereinfacht ggf. die Verbindung mit anderen Materialien des Sacks, wobei die Überlappung mit den anderen Materialien aus denen der Sack gefertigt ist und die Beschichtung nicht identisch sein müssen.

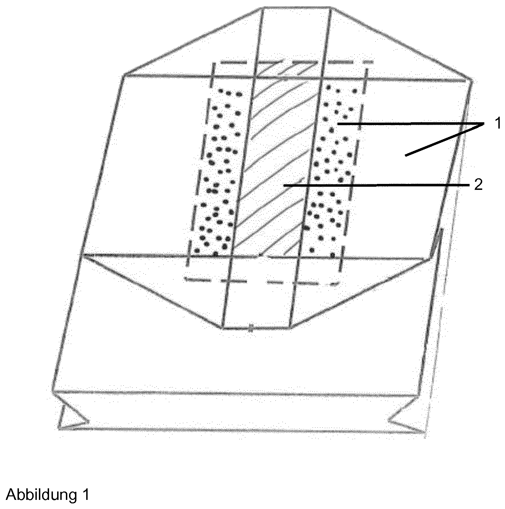

Die Fläche des Flächenabschnitts (F) bezieht sich hierbei auf die Fläche der Öffnung, die nach Auflösen des wasserlöslichen Polymers entsteht (siehe auch Abbildung 1).

Grundsätzlich ist die vorliegende Erfindung auf Säcke jeder Größe anwendbar. Daher hat der Sack der vorliegenden Erfindung vorzugsweise ein Volumen von mindestens 500 ml, stärker bevorzugt von mindestens 1,00 l und noch stärker bevorzugt von mindestens 5,00 I. Üblicherweise beträgt das Volumen des Sacks nicht mehr als 70,0 l bevorzugt sind nicht mehr als 30,0 I.

Der Flächenabschnitt (F) kann eine Lage wasserlösliches Polymer oder mehrere Lagen wasserlösliches Polymer, üblicherweise nicht mehr als zwei Lagen wasserlösliches Polymer umfassen. Bevorzugt ist es jedoch, wenn der Flächenabschnitt (F) nur eine Lage wasserlösliches Polymer aufweist.

Das wasserlösliche Polymer ist vorzugsweise ausgewählt aus Polyvinylalkohol Homo- oder Copolymeren und teilverseiften Polyvinylalkohol Homo- oder Copolymeren.

Besonders bevorzugte wasserlösliche Polymere basieren bevorzugt auf einem Polyvinylalkohol oder einem Polyvinylalkoholcopolymer, dessen Molekulargewicht im Bereich von 10.000 bis 1.000.000 g/mol, vorzugsweise von 20.000 bis 500.000 g/mol, besonders bevorzugt von 30.000 bis 100.000 g/mol und insbesondere von 40.000 bis 80.000 g/mol liegt.

Die Herstellung von Polyvinylalkohol geschieht üblicherweise durch Hydrolyse von Polyvinylacetat, da der direkte Syntheseweg nicht möglich ist. Ähnliches gilt für Polyvinylalkoholcopolymere, die aus entsprechend aus Polyvinylacetatcopolymeren hergestellt werden. Bevorzugt ist, wenn wenigstens eine Lage des Flächenabschnitts (F) einen Polyvinylalkohol umfasst, dessen Hydrolysegrad 70 bis 100 Mol-%, vorzugsweise 80 bis 90 Mol-%, besonders bevorzugt 81 bis 89 Mol-% und insbesondere 82 bis 88 Mol-% ausmacht. Falls der Flächenabschnitt (F) mehrere Lagen wasserlösliches Polymer aufweist umfassen insbesondere bevorzugt alle Lagen einen Polyvinylalkohol, dessen Hydrolysegrad 70 bis 100 Mol-%, vorzugsweise 80 bis 90 Mol-%, besonders bevorzugt 81 bis 89 Mol-% und insbesondere 82 bis 88 Mol-% ausmacht.

Dem Flächenabschnitt (F) kann zusätzlich ein Polymer ausgewählt aus der Gruppe umfassend Acrylsäure-haltige Polymere, Polyacrylamide, Oxazolin-Polymere, Polystyrolsulfonate, Polyurethane, Polyester, Polyether Polymilchsäure oder Mischungen der vorstehenden Polymere zugesetzt sein. Falls vorhanden, ist der Anteil dieser Polymere an dem Flächenabschnitt (F) nicht mehr als 15 Gew.%, stärker bevorzugt nicht mehr als 10 Gew.%.

Die Polyvinylalkoholcopolymere können neben Vinylalkohol Dicarbonsäuren als weitere Monomere umfassen, beispielsweise Itaconsäure, Malonsäure, Bernsteinsäure und Mischungen daraus, wobei Itaconsäure bevorzugt ist.

Die Polyvinylalkoholcopolymere können neben Vinylalkohol eine ethylenisch ungesättige Carbonsäure, deren Salz oder deren Ester enthalten, beispielsweise Acrylsäure, Methacrylsäure, Acrylsäureester, Methacrylsäureester oder Mischungen daraus.

Geeignete wasserlöslich Polymere bzw. Folien sind beispielsweise Folien der Solublon-Serie (Aicello Chemicals), insbesondere der Typ KC, die Selvol-Produktserie der Firma Sekisui und die Hi-Selon-Serie der Firma Nippon Gohsei.

Vorzugsweise besteht der Flächenabschnitt (F) aus einer Folie mit einer Folienstärke von mehr als 40 µm bis 200 µm, stärker bevorzugt mit einer Folienstärke von 45 µm bis 175 µm, noch stärker bevorzugt von 50 µm bis 150 µm und am stärksten bevorzugt von 55 µm bis 100 µm.

Die Folie kann dabei ein oder mehreren Lagen des wasserlöslichen Polymers umfassen oder daraus bestehen, wie oben beschrieben.

Erfindungsgemäß enthält der Sack bis auf den Flächenabschnitt (F) wasserunlösliches Papier und/oder wasserunlösliches Polymer oder besteht daraus. Insbesondere bevorzugt ist es, dass das wasserunlösliche Papier aus Recyclingpapier oder Kraftpapier, noch stärker bevorzugt Kraftpapier und das wasserunlösliche Polymer aus Polypropylen, Polyacrylat, Polyethylenterephthalat oder Polyethylen, insbesondere Polyethylen, beispielsweise LDPE oder HDPE, ausgewählt ist. Das wasserunlösliche Papier und das wasserunlösliche Polymer können auch mehrlagig sein. Beispielsweise kann das wasserunlösliche Papier mit einem Polymer, z.B. Innenfolie beschichtet sein.

Der Sack kann beispielsweise ein Papiersack oder Kunststoffsack sein, der den Flächenabschnitt (F) gemäß der vorliegenden Erfindung aufweist.

Papiersäcke weisen üblicherweise ein zwei- oder dreilagiges Material auf, optional weiter enthaltend eine Innenlage aus Polyethylen oder bestehen hieraus.

Kunststoffsäcke können beispielsweise (Verbund-)Foliensäcke oder Gewebesäcke sein. Im Falle von Gewebesäcken wird üblicherweise ein Inliner aus Polyethylen verwendet, der den Flächenabschnitt (F) der vorliegenden Erfindung aufweist.

(Verbund-)Foliensäcke weisen normalerweise eine oder mehrere Polymerlagen auf.

Die Anbringung des Flächenabschnitts (F) an das Sackmaterial ist im Stand der Technik bekannt. Beispielsweise kann der Flächenabschnitt (F) mit dem wasserunlöslichen Papier und/oder wasserunlöslichen Polymer kaltverschweißt, diffusionsverklebt (wird oft synonym verwendet), quellverschweißt, beispielsweise mittels Tetrahydrofuran oder mittels Stärkeklebstoff, Dispersionskleber oder Schmelzkleber verklebt werden. Alternativ kann die Anbringung des Flächenabschnitts (F) mittels mechanischer Verzahnung oder Verpressung erfolgen.

Der Sack kann in einer Ausführungsform Abschnitte aus wasserunlöslichem Papier, wasserunlöslichem Polymer und dem Flächenabschnitt (F) enthalten.

In einer besonders bevorzugten Ausführungsform ist der Sack ein Papiersack, vorzugsweise aus Kraftpapier, mit einer Bodenfläche, die aus einem Anteil wasserlöslichem Polymer, insbesondere Polyethylen, beispielsweise LDPE oder HDPE, und dem Flächenabschnitt (F) ausgewählt aus Polyvinylalkohol Homo- oder Copolymeren und teilverseiften Polyvinylalkohol Homo- oder Copolymeren, besteht. In dieser Ausführungsform macht der Flächenabschnitt (F) mehr als 11,5% und nicht mehr als 90%, stärker bevorzugt 15% oder mehr und nicht mehr als 75%, noch stärker bevorzugt 20% oder mehr und nicht mehr als 55% und am stärksten bevorzugt 30% oder mehr und nicht mehr als 45% der Bodenfläche des Sacks aus.

In dieser besonders bevorzugten Ausführungsform wird die Bodenfläche vorzugsweise an allen Seiten vollflächig, möglicherweise mit Aussparung an der Papiereckfalte des Sacks, mit der Papierfläche des Sacks verbunden. Die Verbindung kann durch Kaltverkleben, Diffuisonsverkleben, Quellverschweißen, beispielsweise mittels Tetrahydrofuran, Verklebung mittels Stärkeklebstoff, Dispersionskleber oder Schmelzkleber, mechanische Verzahnung, Vernähung oder Verpressung erfolgen.

Der Flächenabschnitt (F) des Sacks kann vollständig mit einem von dem Flächenabschnitt abnehmbaren Deckblatt abgedeckt sein. Ein derartiges Deckblatt kann den Flächenabschnitt (F) vor mechanischer Beschädigung oder Kontakt mit Feuchtigkeit schützen, falls erforderlich.

Grundsätzlich kommen zur Befestigung und Entfernung des Deckblattes alle Methoden in Frage, die auch zum Verschließen und Öffnen des Sacks in Frage kommen. In der vorliegenden Erfindung wird entsprechend nicht der Sack direkt geöffnet, sondern stattdessen der darunterliegende Flächenabschnitt (F) freigelegt.

Beispielsweise kann eine, wie z.B. in der EP 2 132 103 B1 beschriebene Öffnungshilfe, bei der es sich um ein Aufreißband oder einen Aufreißfaden handeln kann und an mindestens einem Flächenende des Innenriegels an einem Ende eines Papiersacks über diesen hinausragt verwendet werden. Der Aufreißfaden ermöglicht ein leichtes Öffnen, in diesem Fall ein leichtes Freilegen des wasserlöslichen Flächenabschnitts F) des eventuell vorhandenen Deckblatts ohne Werkzeug.

Das Deckblatt kann auch verklebt oder vernäht sein.

Es ist ferner bevorzugt, dass der Sack bis auf den Flächenabschnitt (F) und das abnehmbare Deckblatt das gleiche Material enthalten oder daraus bestehen.

Ein einer bevorzugten Ausführungsform enthält der Sack bis auf den Flächenabschnitt (F) wasserunlösliches Papier, insbesondere Kraftpapier, oder besteht daraus und das wasserlösliche Polymer ist vorzugsweise ausgewählt aus Polyvinylalkohol Homo- oder Copolymeren und teilverseiften Polyvinylalkohol Homo- oder Copolymeren gemäß der vorliegenden Erfindung.

Ein einer bevorzugten Ausführungsform enthält der Sack bis auf den Flächenabschnitt (F) wasserunlösliches Polymer, insbesondere Polyethylen, beispielsweise LDPE oder HDPE, oder besteht daraus und das wasserlösliche Polymer ist vorzugsweise ausgewählt aus Polyvinylalkohol Homo- oder Copolymeren und teilverseiften Polyvinylalkohol Homo- oder Copolymeren gemäß der vorliegenden Erfindung.

Der Sack enthält vorzugsweise einen flüssigen oder pulverförmigen Stoff, vorzugsweise ist
- der flüssige Stoff ausgewählt aus Pestiziden, beispielsweise Pflanzenschutzmittel oder Biozide und
- der pulverförmige Stoff ausgewählt aus organischen, anorganischen und mineralischen Pulverprodukten, wie beispielsweise Trockenmörtelmischung, Zement, Quarzsand, insbesondere Zement.

Die vorliegende Erfindung betrifft ferner ein Verfahren zur Entnahme eines flüssigen oder pulverförmigen Stoffes aus einem Sack wie oben beschrieben enthaltend einen flüssigen oder pulverförmigen Stoff, das Verfahren enthaltend die folgenden Schritte in der angegebenen Reihenfolge
a) optional zumindest teilweises Freilegen des Flächenabschnitts (F), falls ein Deckblatt vorhanden ist,
b) Einbringen des Sacks in einen, Wasser enthaltenden, Behälter derart, dass der Flächenabschnitt (F) sich zumindest teilweise, vorzugsweise vollständig unter der Wasserlinie befindet,
c) Abwarten bis sich der Flächenabschnitts (F) zumindest teilweise aufgelöst hat,
d) Herausziehen des Sacks aus dem Behälter wobei die Öffnung, die nach dem zumindest teilweisen Auflösen des Flächenabschnitts (F) entstanden ist, sich während des Herausziehens zumindest teilweise, vorzugsweise vollständig unterhalb der Wasserlinie befindet.

Ein abnehmbares Deckblatt, falls vorhanden, muss nicht vollständig vom Sack getrennt werden. Für die Durchführung der Erfindung ist es ausreichend wenn der Flächenabschnitt (F) teilweise freigelegt wird. Eine vollständige Freilegung ist natürlich bevorzugt, da die Entleerung schneller erfolgt. Eine vollständige Abtrennung des abnehmbaren Deckblatts von dem Sack ist ebenfalls nicht erforderlich. Es ist beispielsweise ausreichend, wenn das, in der Regel (annähernd) rechteckige Deckblatt mit einer Seite mit dem Sack verbunden bleibt. Dies erleichtert auch die Entsorgung der leeren Säcke, da weniger Einzelteile vorhanden sind.

Vorzugsweise wird Schritt c), insbesondere bevorzugt die Schritte a) bis d) bei einer Temperatur von über 0° C durchgeführt. Eine Auflösung des wasserlöslichen Polymers bei niedrigeren Temperaturen kann unter Umständen länger dauern.

Schritt c) dauert üblicherweise 15 Sekunden bis 5 Minuten.

Die Erfindung ist ferner gerichtet auf Verfahren zur Herstellung eines Sacks gemäß der vorliegenden Erfindung, dadurch gekennzeichnet, dass eine Fläche eines wasserunlösliches Papier oder einen wasserunlöslichen Polymers an eine Fläche eines wasserlöslichen Polymers angebracht wird. Wie oben ausgeführt, kann der Sack beispielsweise ein Ventilbodensack, ein Blockbodensack, ein Blockbodenbeutel, ein Kreuzbodensack, ein Ventilseitenfaltensack, ein Falzbodensack, ein Mini-Seal-Sack oder ein Siegelrandbeutel sein.

Konventionelle Säcke und deren Verfahren zur Herstellung sind beispielsweise in der DE 20 2008 003 172 U1, WO 2010/099902 A1, EP 0 243 750 A2 und WO 2000/043272 A1 beschrieben. Diese Verfahren sind grundsätzlich auch zur Herstellung der erfindungsgemäßen Säcke anwendbar.

Bevorzugte Merkmale des Sacks der vorliegenden Erfindung sind auch bevorzugte Merkmale der Verfahren der vorliegenden Erfindung.

Die Erfindung ist ferner gerichtet auf die Verwendung eines Flächenabschnitts (F) aus einem wasserlöslichen Polymer als Teil eines Sacks für flüssige oder pulverförmige Stoffe wie oben beschrieben, zur Reduzierung der Freisetzung von unangenehmen Gerüchen und/oder gesundheitsschädlichen Stoffen in die Luft, insbesondere zur Reduzierung der Freisetzung von alveolengängigen Stäuben.

Bevorzugte Merkmale des Sacks der vorliegenden Erfindung sind auch bevorzugte Merkmale der Verwendungen der vorliegenden Erfindung.

Abbildung 1 zeigt ein Beispiel für ein modifiziertes Ventilbodenblatt (1) als Teil eines Sackes gemäß der vorliegenden Erfindung in dem sich der Flächenabschnitt (F) (2) im Boden des Sackes befindet und aus einer Polyvinylalkoholfolie besteht. Das modifizierte Ventilbodenblatt (1) als Teil des Sackes selbst kann beispielsweise aus Papier, insbesondere Kraftpapier oder Polyethylen, insbesondere LDPE bestehen. Der Sack selbst kann beispielsweise aus Papier oder LDPE bestehen.

## Patentansprüche

1. Sack mit Standboden für flüssige oder pulverförmige Stoffe aufweisend einen Anteil aus wasserunlöslichem Papier und/oder wasserunlöslichem Polymer und einen Flächenabschnitt (F) aus einem wasserlöslichen Polymer, wobei die Bodenfläche des Sacks aus dem wasserunlöslichen Papier und/oder wasserunlöslichen Polymer und dem Flächenabschnitt (F) besteht, **dadurch gekennzeichnet, dass** der Flächenabschnitt (F) einen Abschnitt des Sacks bedeckt, der aus dem wasserunlöslichen Papier und/oder wasserunlöslichen Polymer ausgespart ist, so dass der Flächenabschnitt (F) im Gebrauch in direktem Kontakt mit dem Füllgut des Sacks ist, wobei der Flächenabschnitt (F) mehr als 11,5% und nicht mehr als 90% der Bodenfläche des Sacks ausmacht, wobei nach Auflösen des wasserlöslichen Polymers eine Öffnung entsteht, durch welche der Sack entleert werden kann.

2. Sack gemäß Anspruch 1, **dadurch gekennzeichnet, dass** der Flächenabschnitt (F) mehr als 5% und nicht mehr als 35% der Oberfläche des Sacks ausmacht.

3. Sack gemäß Anspruch 1 oder 2, **dadurch gekennzeichnet, dass** das wasserlösliche Polymer ausgewählt ist aus Polyvinylalkohol Homo- oder Copolymeren und teilverseiften Polyvinylalkohol Homo- oder Copolymeren.

4. Sack gemäß einem der vorangegangenen Ansprüche, **dadurch gekennzeichnet, dass** das wasserunlösliche Papier aus Recyclingpapier oder Kraftpapier und das wasserunlösliche Polymer aus Polypropylen, Polyacrylat, Polyethylenterephthalat oder Polyethylen ausgewählt ist.

5. Sack gemäß einem der vorangegangenen Ansprüche, **dadurch gekennzeichnet, dass** der Flächenabschnitt (F) aus einer Folie mit einer Folienstärke von mehr als 40 µm bis 200 µm besteht.

6. Sack gemäß einem der vorangegangenen Ansprüche, **dadurch gekennzeichnet, dass** der Flächenabschnitt (F) vollständig mit einem abnehmbaren Deckblatt abgedeckt ist.

7. Sack gemäß Anspruch 6, **dadurch gekennzeichnet, dass** der Sack bis auf den Flächenabschnitt (F) und das abnehmbare Deckblatt das gleiche Material enthalten oder daraus bestehen.

8. Sack gemäß einem der vorangegangenen Ansprüche, **dadurch gekennzeichnet, dass** der Sack einen flüssigen oder pulverförmigen Stoff enthält.

9. Verfahren zur Entnahme eines flüssigen oder pulverförmigen Stoffes aus einem Sack gemäß Anspruch 8, enthaltend die folgenden Schritte in der angegebenen Reihenfolge
a) optional zumindest teilweises Freilegen des Flächenabschnitts (F), falls ein Deckblatt vorhanden ist,
b) Einbringen des Sacks in einen, Wasser enthaltenden, Behälter derart, dass der Flächenabschnitt (F) sich zumindest teilweise unter der Wasserlinie befindet,
c) Abwarten bis sich der Flächenabschnitts (F) zumindest teilweise aufgelöst hat,
d) Herausziehen des Sacks aus dem Behälter, wobei die Öffnung, die nach dem zumindest teilweisen Auflösen des Flächenabschnitts (F) entstanden ist, sich während des Herausziehens zumindest teilweise unterhalb der Wasserlinie befindet.

10. Verfahren zur Herstellung eines Sacks gemäß einem der vorangegangenen Ansprüche 1 bis 7, **dadurch gekennzeichnet, dass** eine Fläche eines wasserunlöslichen Papiers oder eines wasserunlöslichen Polymers an eine Fläche eines wasserlöslichen Polymers angebracht wird.

11. Verwendung eines Sacks gemäß einem der vorangegangenen Ansprüche 1 bis 7 zur Verpackung von flüssigen oder pulverförmigen Stoffen.

12. Verwendung eines Flächenabschnitts (F) aus einem wasserlöslichen Polymer als Teil eines Sacks mit Standboden für flüssige oder pulverförmige Stoffe gemäss Anspruch 1 zur Reduzierung der Freisetzung von unangenehmen Gerüchen und/oder gesundheitsschädlichen Stoffen in die Luft, insbesondere zur Reduzierung der Freisetzung von alveolengängigen Stäuben.

## Claims

1. Bag with stand-up bottom for liquid or pulverulent materials having a portion composed of water-insoluble paper and/or water-insoluble polymer and a surface section (F) composed of a water-soluble polymer, the bottom face of the bag consisting of the water-insoluble paper and/or water-insoluble polymer and the surface section (F), **characterized in that** the surface section (F) covers a section of the bag that has been cut out of the water-insoluble paper and/or water-insoluble polymer, such that the surface section (F) is in direct contact with the filling material of the bag during use, the surface section (F) accounting for more than 11.5% and not more than 90% of the bottom face of the bag, dissolution of the water-soluble polymer producing an opening through which the bag can be emptied.

2. Bag according to Claim 1, **characterized in that** the surface section (F) accounts for more than 5% and not more than 35% of the surface area of the bag.

3. Bag according to Claim 1 or 2, **characterized in that** the water-soluble polymer is selected from polyvinyl alcohol homo- or copolymers and partially hydrolysed polyvinyl alcohol homo- or copolymers.

4. Bag according to any of the preceding claims, **characterized in that** the water-insoluble paper is selected from recycled paper or kraft paper and the water-insoluble polymer is selected from polypropylene, polyacrylate, polyethylene terephthalate or polyethylene.

5. Bag according to any of the preceding claims, **characterized in that** the surface section (F) consists of a film having a film thickness of more than 40 µm to 200 µm.

6. Bag according to any of the preceding claims, **characterized in that** the surface section (F) is completely covered by a removable cover sheet.

7. Bag according to Claim 6, **characterized in that** the bag contains or consists of the same material apart from the surface section (F) and the removable cover sheet.

8. Bag according to any of the preceding claims, **characterized in that** the bag contains a liquid or pulverulent material.

9. Method for removing a liquid or pulverulent material from a bag according to Claim 8, containing the following steps in the order indicated
a) optionally at least partly exposing the surface section (F), if a cover sheet is present,
b) introducing the bag into a water-containing container such that the surface section (F) is at least partly below the waterline,
c) waiting until the surface section (F) has at least partly dissolved,
d) pulling the bag out of the container, the opening produced after the surface section (F) has been at least partly dissolved being at least partly below the waterline while pulling out the bag.

10. Method for producing a bag according to any of the preceding Claims 1 to 7, **characterized in that** a surface of a water-insoluble paper or a water-insoluble polymer is attached to a surface of a water-soluble polymer.

11. Use of a bag according to any of the preceding Claims 1 to 7 for packing liquid or pulverulent materials.

12. Use of a surface section (F) composed of a water-soluble polymer as part of a bag with stand-up bottom for liquid or pulverulent materials according to Claim 1 for reducing the release of unpleasant odours and/or harmful substances into the air, in particular for reducing the release of alveoli-reaching dusts.

## Revendications

1. Sac à fond plat pour substances liquides ou pulvérulentes, comportant une partie à base de papier insoluble dans l'eau et/ou de polymère insoluble dans l'eau et un segment (F) de surface à base d'un polymère soluble dans l'eau, la surface de fond du sac étant constituée du papier insoluble dans l'eau et/ou du polymère insoluble dans l'eau et du segment (F) de surface, **caractérisé en ce que** le segment (F) de surface (F) recouvre un segment du sac qui est épargné du papier insoluble dans l'eau et/ou du polymère insoluble dans l'eau, de sorte qu'en utilisation le segment (F) de surface est en contact direct avec le produit de remplissage du sac, le segment (F) de surface (F) représentant plus de 11,5 % et au maximum 90 % de la surface de fond du sac, une ouverture étant formée après dissolution du polymère soluble dans l'eau, à travers laquelle le sac peut être vidé.

2. Sac selon la revendication 1, **caractérisé en ce que** le segment (F) de surface (F) représente plus de 5 % et au maximum 35 % de la surface du sac.

3. Sac selon la revendication 1 ou 2, **caractérisé en ce que** le polymère soluble dans l'eau est choisi parmi les homo- ou copolymères de poly(alcool vinylique) et les homo- ou copolymères de poly(alcool vinylique) partiellement saponifiés.

4. Sac selon l'une quelconque des revendications précédentes, **caractérisé en ce que** le papier insoluble dans l'eau est choisi parmi le papier recyclé ou le papier kraft et le polymère insoluble dans l'eau est choisi parmi le polypropylène, le polyacrylate, le poly(éthylène téréphtalate) ou le polyéthylène.

5. Sac selon l'une quelconque des revendications précédentes, **caractérisé en ce que** le segment (F) de surface est constitué d'un film ayant une épaisseur de film de plus de 40 µm à 200 µm.

6. Sac selon l'une quelconque des revendications précédentes, **caractérisé en ce que** le segment (F) de surface est entièrement recouvert par une feuille de couverture amovible.

7. Sac selon la revendication 6, **caractérisé en ce que** le sac, hormis le segment (F) de surface, et la feuille de couverture amovible contiennent ou consistent en la même matière.

8. Sac selon l'une quelconque des revendications précédentes, **caractérisé en ce que** le sac contient une substance liquide ou pulvérulente.

9. Procédé pour le prélèvement d'une substance liquide ou pulvérulente hors d'un sac selon la revendication 8, comportant dans l'ordre indiqué les étapes suivantes, consistant à
a) en option mettre au moins partiellement à découvert le segment (F) de surface (F), si une feuille de couverture est présente,
b) introduire le sac dans un récipient contenant de l'eau, de sorte que le segment (F) de surface se trouve au moins partiellement sous la surface de l'eau,
c) attendre jusqu'à dissolution au moins partielle du segment (F) de surface,
d) retirer le sac hors du récipient, l'ouverture qui est formée après la dissolution au moins partielle du segment (F) de surface se trouvant pendant le retrait au moins partiellement au-dessous de la surface de l'eau .

10. Procédé de fabrication d'un sac selon l'une quelconque des revendications 1 à 7 précédentes, **caractérisé en ce qu'**une surface d'un papier insoluble dans l'eau ou d'un polymère insoluble dans l'eau est appliquée sur une surface d'un polymère soluble dans l'eau.

11. Utilisation d'un sac selon l'une quelconque des revendications précédentes 1 à 7 pour l'emballage de substances liquides ou pulvérulentes.

12. Utilisation d'un segment (F) de surface à base d'un polymère soluble dans l'eau en tant que partie d'un sac à fond plat pour substances liquides ou pulvérulentes selon la revendication 1, pour la réduction de la libération dans l'air d'odeurs désagréables et/ou de substances nuisibles à la santé, en particulier pour la réduction de la libération de poussières pénétrant dans les alvéoles.
